# EUROPÄISCHE PATENTSCHRIFT

(11) **EP 3 242 080 B1**
(45) Veröffentlichungstag und Bekanntmachung des Hinweises auf die Patenterteilung: **10.07.2019**
(21) Anmeldenummer: 16168425.3
(22) Anmeldetag: 04.05.2016
(51) Int. Cl.: F23C 3/00, F23N 5/02

(54) **VORRICHTUNG UND VERFAHREN ZUR BEHEIZUNG VON ÖFEN MITTELS STRAHLROHREN**
APPARATUS AND METHOD FOR HEATING OF FURNACES USING RADIANT TUBES
DISPOSITIF ET PROCÉDÉ DE CHAUFFAGE DE FOURS À L'AIDE DE TUBES RADIANTS

(43) Veröffentlichungstag der Anmeldung: 08.11.2017
(73) Patentinhaber: WS-Wärmeprozesstechnik GmbH, 71272 Renningen (DE)
(72) Erfinder: Wünning, Joachim A., 71229 Leonberg (DE); Wünning, Joachim G., 71229 Leonberg (DE)
(74) Vertreter: Rüger Abel

(56) Entgegenhaltungen:
- EP-A2- 0 685 683
- US-A1- 2013 157 204

## Beschreibung

Die Erfindung betrifft eine Ofenbeheizungseinrichtung und ein Verfahren zum Zünden von zur flammenlosen Oxidation eingerichteten Brennern zur Beheizung von getaktet betriebenen Strahlrohren.

Aus der EP 0 463 218 A1 ist der Betrieb von Brennern mit flammenloser Oxidation bekannt. Diese beruht darauf, ein vorgeheiztes Brennstoffluftgemisch mit hoher Geschwindigkeit in einen Abgasrezirkulationswirbel zu injizieren. Zum Aufheizen des Brenners dient eine Brennkammer, die mit Flamme betrieben wird. Nach erreichter Betriebstemperatur kann auf flammenlose Oxidation umgeschaltet werden. Weiter ist aus der EP 0 685 683 A2 eine Ofenbeheizungseinrichtung für Industrieöfen zur Wärmebehandlung von Gütern in einem Ofenraum bekannt, die mindestens ein zur Beheizung des Ofenraums dienendes Strahlrohr aufweist. Dieses ist mittels eines Brenners beheizbar, der in einer ersten Betriebsart mit Flamme und in einer zweiten Betriebsart ohne flamme betreibbar ist. Es ist eine Steuereinrichtung vorgesehen, mittels derer der Brenner des Stahlrohrs ein- und ausschaltbar und zwischen den beiden Betriebsarten umschaltbar ist. Die Temperatur des Ofenraums wird mittels der Steuereinrichtung geregelt. Liegt sie unterhalb einer kritischen Temperatur, die in einem Brennraum zur flammenlosen Oxidation des verwendeten Brennstoffs mindestens vorliegen muss, wird der Brenner mit Flamme betrieben.

Weiter ist aus der DE 102 17 524 B4 die Beheizung von Strahlrohren mittels Brennern bekannt, die mit flammenloser Oxidation arbeiten. Auch solche Brenner sind dazu eingerichtet, in der Aufheizphase eine Betriebsart mit Flamme einzunehmen.

Schließlich ist aus der EP 1 995 515 B1 ein Brenner zur Beheizung von Ofenräumen mittels flammenloser Oxidation bekannt, bei denen die Betriebstemperatur unterhalb einer für die flammenlose Oxidation erforderlichen Grenztemperatur liegt. Dazu werden mittels einer stabil brennenden Flamme heiße Gase erzeugt, die zur Unterstützung und Aufrechterhaltung der ansonsten flammenlosen Oxidation dienen.

Strahlrohre werden typischerweise zur indirekten Beheizung von Industrieöfen für Temperaturen bis etwa 1200°C genutzt. Zur Abgabe von Strahlungswärme werden die Strahlrohre von innen her beheizt, wobei die Beheizung des Strahlrohrs durch flammenlose Oxidation erfolgen kann, was die Stickoxide im Abgas stark reduziert.

Wird eine Temperaturregelung des Industrieofens durch Ein- und Ausschalten einzelner Strahlrohre oder ganzer Strahlrohrgruppen bewirkt, müssen die Strahlrohre im betriebswarmen Zustand ein- und ausschalten. Bei der Wärmebehandlung von Stahl oder anderen Werkstoffen, liegt die Ofentemperatur im Betrieb, je nach Anwendung, zum Beispiel unter 850°C. Solche Ofentemperaturen, die typischerweise unter 900°C jedoch deutlich über 700° C liegen, können durch Strahlrohre erzeugt werden. Werden die Strahlrohre durch Brenner mit Flamme beheizt und wird aus Gründen der Energieersparnis mit hoher Luftvorwärmung gearbeitet (insbesondere Luftvorwärmung von über 500°C), sind die entstehenden Stickoxidwerte aber inakzeptabel hoch. Der Betrieb der Brenner mit flammenloser Oxidation führt hingegen zu niedrigeren Stickoxidwerten, wobei erfahrungsgemäß bei Strahlrohr beheizten Öfen eine Ofenbetriebstemperatur von mindestens 850°C erforderlich ist, um einen Brenner betriebssicher mit flammenloser Oxidation in Betrieb nehmen zu können. Liegt die Ofentemperatur niedriger können bei getaktetem Betrieb, d.h. Ein- und Ausschalten von Brennern zur Leistungsregulierung, jedoch Verpuffungen auftreten. Insoweit werden Ofenbetriebstemperaturen unterhalb 850 °C (aber über 700 °C) für getakteten flammenlosen Brennerbetrieb (flammenlose Pulsfeuerung) als kritisch angesehen.

Es ist Aufgabe der Erfindung, ein Konzept anzugeben, mit dem sich Strahlrohre bei kritischen Ofentemperaturen betriebssicher in flammenloser Pulsfeuerung betreiben lassen.

Diese Aufgabe wird mit der Ofenbeheizungseinrichtung nach Anspruch 1 sowie dem Verfahren nach Anspruch 8 gelöst: Die erfindungsgemäße Ofenbeheizungseinrichtung weist mindestens ein, vorzugsweise mehrere, Strahlrohre auf, die jeweils mittels (mindestens) eines Brenners beheizbar sind, der in einer ersten Betriebsart mit Flamme und in einer zweiten Betriebsart ohne Flamme, d.h. mit flammenloser Oxidation betreibbar ist. Der Innenraum des Strahlrohrs ist vorzugsweise gegen den Ofenraum abgedichtet. Es ist mindestens eine Steuereinrichtung vorgesehen, mittels derer der bzw. die Brenner der Strahlrohre ein- und ausschaltbar sowie zwischen der ersten und der zweiten Betriebsart umschaltbar sind. Die Temperatur des Innenraums des Strahlrohrs liegt bei aktivem Brenner über der Temperatur des Ofenraums. In Betriebspausen, die bei Pulsfeuerung wiederholt auftreten, nähert sich die Temperatur in den Innenräumen der Strahlrohre von oben her der Ofentemperatur an.

Erfindungsgemäß ist die Steuereinrichtung darauf eingerichtet, den Brenner beim Warmstart, d.h. bei auf Betriebstemperatur befindlichem Ofen, kurzzeitig in der ersten Betriebsart und danach in der zweiten Betriebsart zu betreiben. Wird der Brenner des Strahlrohrs getaktet, d.h. mit sogenannter Pulsfeuerung betrieben, muss der Brenner wieder und wieder betriebssicher gestartet werden. Dies erfolgt vorzugsweise jeweils mit Zünden einer Flamme, die wenige Sekunden brennt. Damit lässt sich die Temperatur des Innenraums des Strahlrohrs trotz relativ niedriger (kritischer) Ofenbetriebstemperatur von z.B. lediglich 800°C auf eine Temperatur über 850°C, z.B. 900°C anheben, wonach sicher in die flammenlose Betriebsart umgeschaltet wird.

Unterhalb der brennstoffabhängigen kritischen Temperatur Tₖ des Ofenraums, oberhalb derer der Brenner ohne weiteres in flammenlosem Betrieb betrieben und auch gezündet werden kann, existiert ein kritischer Temperaturbereich, innerhalb dessen der Brenner in dem Strahlrohr noch flammenlos betrieben werden kann. Es bildet sich ein Wärmegefälle von dem Strahlrohrinnenraum zu dem Ofenraum hin, so dass die Strahlrohrinnentemperatur sicher über der kritischen Temperatur Tₖ liegt. Innerhalb des kritischen Temperaturbereichs besteht aber Verpuffungsgefahr bei flammenloser Brennerzündung. Erfindungsgemäß wird in diesem kritischen Temperaturbereich mit kurzer, wenige Sekunden langer Flamme gezündet, um dann sofort in flammenlosen Betrieb überzugehen.

Die Ofenbeheizungseinrichtung kann eine Einrichtung zur wenigstens lokalen Erfassung der Ofentemperatur, z.B. in Gestalt eines oder mehrerer schaltender Temperaturfühler, aufweisen. Ist ein solcher Temperaturfühler an einer Stelle eines Industrieofens angeordnet, bestimmt er das Ein- und Ausschalten von Brennern anhand der Ofentemperatur, nicht aber anhand der Brennertemperatur. Bei gruppenweise betriebenen Brennern kann es deswegen vorkommen, dass einzelne Brenner eine Temperatur aufweisen, die ohne weiteres eine Einleitung einer flammenlosen Oxidation beim Brennerstart gestattet, während andere dafür nicht geeignet sind. Durch die ausnahmslose Zündung der Brenner kurzzeitig in der ersten Betriebsart und das darauffolgende Umschalten in die zweite Betriebsart werden jedoch alle Brenner sicher gezündet und Verpuffungen vermieden. Der kurzzeitige Betrieb in der ersten Betriebsart bei Warmstart ist eine Sicherheitsbetriebsphase zur Verpuffungsvermeidung.

Die Zeitspanne für den Betrieb der Brenner mit in der ersten Betriebsart beträgt vorzugsweise einige Sekunden, z.B. 5 s oder 3 s. Die dabei entstehenden Stickoxide sind wegen der kurzen Zeitspanne vernachlässigbar.

Erfindungsgemäß wird der Brenner zur Beheizung des Strahlrohrs bei heißem Ofen nach einer Feuerpause, wenn die Betriebstemperatur des Ofens unterhalb einer Temperaturgrenze für flammenlose Oxidation liegt, in einer ersten Betriebsart mit Flamme (Sicherheitsbetriebsart) gezündet und ungeachtet der weiterhin unter der Temperaturgrenze liegenden Ofentemperatur kurz darauf in die zweite Betriebsart mit flammenloser Oxidation umgeschaltet.

Sollte die Temperatur in dem Ofenraum während einer Betriebspause des Brenners unter die untere Temperatur Tᵤ abgesunken sein, wird in Kaltstartbetriebsart gezündet und die Flamme an dem Brenner aufrechterhalten, bis die Temperatur in dem Ofenraum die untere Temperatur wieder erreicht.

Bei einer verfeinerten Ausführungsform ist es möglich, die Länge der Zeitspanne für die erste Betriebsart anhand der erfassten Ofentemperatur festzulegen. Dies kann z.B. mittels mehrfacher schaltender Temperaturfühler in Stufen oder auch stufenlos erfolgen.

Einzelheiten vorteilhafter Weiterbildungen der Erfindung sind Gegenstand der Zeichnung der Beschreibung oder von Ansprüche. Es zeigen:
Figur 1 eine Ofenbeheizungseinrichtung mit mehreren Strahlrohren zum Betrieb mit Pulsfeuerung, in stark schematisierter Darstellung,
Figur 2 Temperaturverhältnisse in einem Strahlrohr beim Zünden eines in Pulsbetrieb arbeitenden Strahlrohrs,
Figur 3 Temperaturgrenzen zum Betrieb eines Strahlrohrs im Diagramm,
Figur 4 ein Diagramm zur Veranschaulichung des Pulsbetriebs von Strahlrohren und
Figur 5 temperaturabhängige Zeitspannen für die erste Betriebsart im Diagramm.

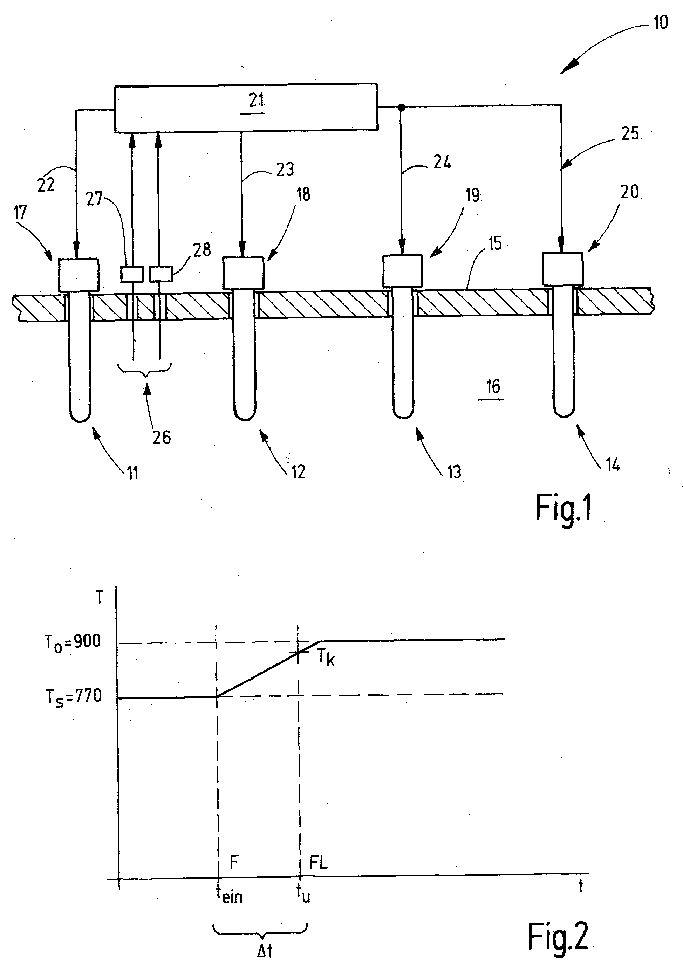

In Figur 1 ist eine Ofenbeheizungseinrichtung 10 veranschaulicht, zu der mindestens ein, vorzugsweise mehrere, Strahlungsheizrohre 11 bis 14 gehören, die hier durchgängig kurz als "Strahlrohre" bezeichnet werden. Diese ragen von einer Ofenwand 15 in einen Ofenraum 16, um darin befindliches nicht weiter veranschaulichtes Gut vorwiegend durch Strahlungswärme zu beheizen.

Die Strahlrohre 11 bis 14 sind durch in Figur 1 lediglich symbolisch dargestellte Brenner 17, 18, 19, 20 beheizt, die vorzugsweise gasbetrieben arbeiten und die Strahlrohre 11 bis 14 von innen her erwärmen. Die Brenner 17 bis 20 dienen zur Beheizung der Innenräume der Strahlrohre 11 bis 14 und sind dazu an einem offenen Ende jedes Strahlrohrs 11 bis 14 angeordnet, dessen anderes Ende vorzugsweise geschlossen ist. Es sind jedoch auch Bauformen möglich, bei denen an beiden Enden eines Strahlrohrs ein Brenner angeordnet ist. Die Strahlrohre 11 bis 14 können wie dargestellt gestreckt und gerade ausgebildet sein oder auch eine oder mehrere Schleifen aufweisen. Ihr Innenraum ist durch die Strahlrohrwand von dem Ofenraum 16 getrennt.

Jeder Brenner 17 bis 20 weist Wärmerückgewinnungseinrichtungen zum Beispiel in Gestalt von Rekuperatoren und/oder Regeneratoren auf, um Abgaswärme zur Vorwärmung von Verbrennungsluft (und Brennstoff) zu nutzen. Vorzugsweise arbeiten die Brenner 17 bis 20 mit hoher Luftvorwärmung, so dass die der Verbrennung zugeführte Luft eine Temperatur von oberhalb 500 °C aufweist. Die Luft-, Gas- und Abgasleitungen sowie darin angeordnete Regelorgane, z.B. Ventile, sind in Figur 1 nicht gesondert dargestellt.

Die Brenner 17 bis 20 können in einer ersten Betriebsart F betrieben werden, in der sie eine Flamme ausbilden. Diese Betriebsart wird zum Kaltstart, d.h. zum Aufheizbetrieb der Strahlrohre 11 bis 14 und des Ofenraums genutzt. Nach erfolgter Aufheizung des Ofenraums bis mindestens auf eine Temperatur Tᵤ können die bis dahin in erster Betriebsart F betriebenen Brenner 17 bis 20 in eine zweite Betriebsart NF ohne Flamme (Betrieb mit flammenloser Oxidation FLOX®) umgeschaltet werden. Die zweite Betriebsart NF zeichnet sich durch eine besonders niedrige NOx-Erzeugung aus.

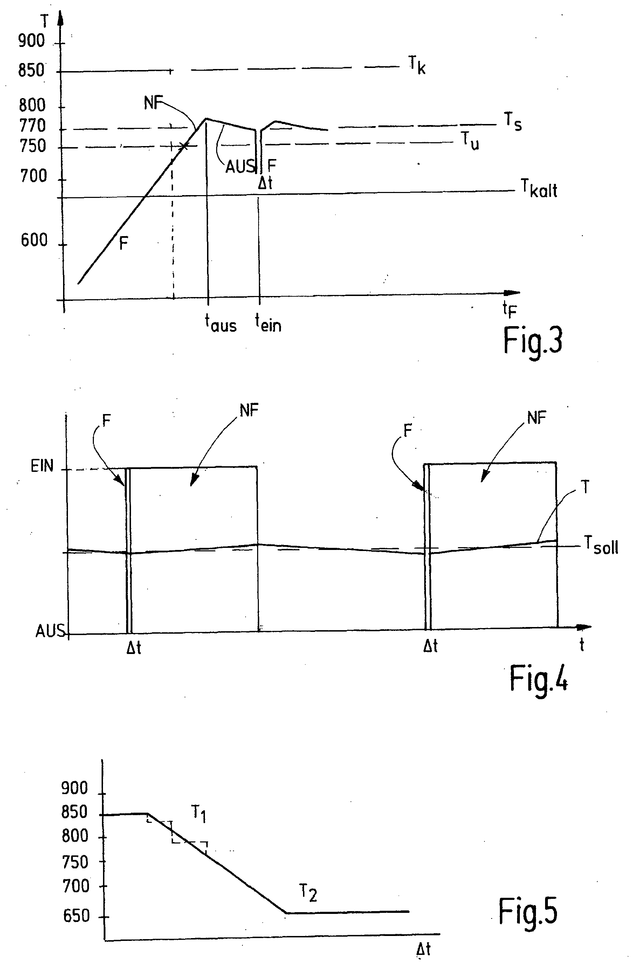

Die niedrigste Temperatur Tᵤ des Ofenraums, bei der sich die Brenner in der zweiten Betriebsart NF betreiben lassen, hängt von der Brennerleistung und somit von der Temperatur ab, die sich bei in Betrieb befindlichem Brenner in dem Strahlrohrinnenraum einstellt. Die niedrigste Temperatur Tᵤ des Ofenraums, bei der FLOX®-Betrieb, d.h. Betrieb in zweiter Betriebsart NF möglich ist, kann z.B. 750°C betragen (Figur 3).

Zum Ein- und Ausschalten der Brenner 17 bis 20 sowie zur Umschaltung der Brenner 17 bis 20 aus der ersten Betriebsart F in die zweite Betriebsart NF (oder umgekehrt) ist eine Steuereinrichtung 21 vorgesehen. Die Steuereinrichtung steuert, wie durch Wirkpfeile 22, 23, 24, 25 angedeutet ist, den Betrieb der von den Brennern 17 bis 20 gebildeten Gruppe, um diese beispielsweise gemeinsam (d.h. gleichzeitig) ein- und auszuschalten, um die Temperatur des Ofenraums 16, z.B. im Wege einer Zweipunkt-Regelung auf der Solltemperatur Tₛ von z.B. 770°C zu halten. Die Temperatur Tₛ liegt etwas über der Temperatur Tᵤ.

Zur Erfassung der Ofentemperatur T ist eine Temperaturerfassungseinrichtung 26 vorgesehen, die mindestens einen, gegebenenfalls auch mehrere Temperatursensoren 27, 28 aufweist. Die Temperatursensoren 27, 28 sind vorzugsweise als Temperaturschalter ausgebildet. Zum Beispiel kann der Temperatursensor 27 auf die gewünschte Ofentemperatur Tₛ eingestellt sein und dazu eine Schalttemperatur von z.B. 770°C aufweisen. Der Temperatursensor 27 kann dazu dienen, die Pulsfeuerung der Brenner 17 bis 20 zur Regulierung der Ofentemperatur auf den gewünschten Wert zu bewirken.

Der zweite Temperatursensor 28 kann auf die niedrigste Temperatur Tᵤ eingestellt sein, bei der ein aktiver Brenner von der ersten Betriebsart F in die zweite Betriebsart NF umschaltbar ist. Zum Beispiel kann er eine Schalttemperatur von 750°C aufweisen.

Die insoweit beschriebene Ofenbeheizungseinrichtung 10 arbeitet wie folgt:

Bei einem in Figur 3 links veranschaulichten Kaltstart, d.h. einen Start der Anlage bei einer Temperatur Tₖₐₗₜ des Ofenraums 16 im Bereich der Umgebungstemperatur oder wenig darüber, jedenfalls aber unter der Temperatur Tᵤ, startet die Steuereinrichtung 21 alle Brenner 17 bis 20 mit Flamme, d.h. in der ersten Betriebsart F, und heizt die Strahlrohre 11 bis 14 und damit den Ofenraum 16 auf. Dieser Vorgang kann erhebliche Zeit in Anspruch nehmen, die typischerweise länger ist als mehrere Minuten. Sobald z.B. mittels des Temperaturfühlers 28 das Erreichen der Temperatur Tᵤ erfasst wird, bei der flammenloser Betrieb möglich ist, schaltet die Steuereinrichtung 21 die Brenner 17 bis 20 in diese Betriebsart NF. In dieser Betriebsart NF wird die Aufheizung fortgesetzt, bis die Solltemperatur Tₛ erreicht oder überschritten wird. Die Strahlrohre 11 bis 14 haben ab der Ofentemperatur Tᵤ am Brenner, d.h. in ihren Innenräumen, eine Temperatur, bei der flammenloser Betrieb möglich ist, z.B. eine Temperatur, die über der kritischen Temperatur Tₖ von z.B. 850°C liegt.

Ist der Ofenraum 16 auf Solltemperatur Tₛ, beispielsweise 770°C aufgeheizt, wird diese Temperatur Tₛ durch Pulsfeuerbetrieb der Brenner 17 bis 20 aufrechterhalten. Z.B. schaltet der Temperatursensor 27 mit einer gewissen Hysterese bei Überschreiten und Unterschreiten der Betriebstemperatur ein und aus, d.h. er gibt ein Schaltsignal an die Steuereinrichtung 21. Diese reguliert die Temperatur in dem Ofenraum 16 durch entsprechendes Ein- und Ausschalten der Brenner 17 bis 20. Figur 3 und insbesondere Figur 4 veranschaulichen diesen Betrieb. Die Steuereinrichtung 21 schaltet die Brenner 17 bis 20 ein, sobald die Solltemperatur Tₛ unterschritten wird. Die Brenner 17 bis 20 werden hingegen abgeschaltet, wenn die Solltemperatur Tₛ überschritten wird. Somit pendelt die reale Temperatur T des Ofenraums 16 entsprechend der Schalthysterese um die Temperatur Tₛ.

Obwohl die Ofentemperatur bei Pulsfeuerbetrieb auf oder oberhalb der niedrigsten Temperatur Tᵤ (z.B. 750°C) liegt, bei der flammenloser Betrieb FL möglich ist, und bei der beim Aufheizen von Flammenbetrieb (erste Betriebsart F) auf flammenlosen Betrieb (zweite Betriebsart NF) umgeschaltet wird, werden die Brenner 17 bis 20 beim Wiedereinschalten jeweils für eine kurze Zeit Δt in der ersten Betriebsart F mit Flamme betrieben. Damit können die Brenner 17 bis 20 verpuffungsfrei gezündet werden, auch wenn die Strahlrohre 11 bis 14 weniger als die kritische Temperatur Tₖ aufweisen (typischerweise 850 °C) . Nach Ablauf der Zeitspanne Δt schaltet die Steuereinrichtung 21 die Brenner 17 bis 20 in flammenlosen Betrieb NF um.

Dieser Vorgang ist in Figur 2 nochmals veranschaulicht. Wird der Brenner bei einer Temperatur Tₛ von z.B. 770° zu dem Zeitpunkt Tₑᵢₙ gezündet, beginnt die Temperatur T innerhalb des Strahlrohrs 11 zügig zu steigen, so dass sie schon nach wenigen Sekunden einen kritischen Wert Tₖ von typischerweise 850°C übersteigt. Es wird deswegen nach Ablauf der Zeitspanne Δt zu einem Zeitpunkt tᵤ nach dem Zeitpunkt tₑᵢₙ zum flammenlosen Betrieb FL übergegangen. Dieser wird solange beibehalten, bis die Steuereinrichtung 21 die Brenner 17 bis 20 wieder abschaltet, beispielsweise aufgrund eines Schaltsignals des Temperaturfühlers 27, der ein Überschreiten der Temperatur Tₛ signalisiert. Die Brenner 17 bis 20 sind dann für eine gewisse Zeit inaktiv, womit die Strahlrohre 11 bis 14 wieder auf Ofentemperatur (z.B. 770°C) abkühlen. Wird die Ofentemperatur Tₛ unterschritten, spricht der Temperaturfühler 27 wieder an und veranlasst die Steuereinrichtung 21 zur Wiedereinschaltung der Brenner 17 bis 20. Dies erfolgt wiederum mit einer vorgeschalteten Betriebsart F für eine Zeitspanne Δt, wonach die Betriebsart NF übergegangen wird.

Die insoweit beschriebene Ofenbeheizungseinrichtung 10 weist zumindest zwei Betriebsarten auf, nämlich Aufheizen der Strahlrohre 11 bis 14 mit den Brennern 17 bis 20 in der ersten Betriebsart F und Regelbetrieb, mittels Pulsfeuerung, bei der die Brenner 17 bis 20 zur Einhaltung einer gewünschten Ofentemperatur Tₛ pulsweise ein- und ausgeschaltet wird. Die Ofentemperatur Tₛ liegt im Regelbetrieb unterhalb einer zur flammenlosen Oxidation geeigneten kritischen Temperatur Tₖ. Diese Temperatur Tₖ ist vom verwendeten Brennstoff abhängig, bei Erdgas liegt sie etwa bei 850°C. Im Regelbetrieb (Pulsfeuerbetrieb) werden die Brenner 17 bis 20 deswegen immer in einer Startsequenz gezündet, bei der die Brenner 17 bis 20 beim Start für eine kurze Zeitspanne Δt in der ersten Betriebsart F gezündet werden, wobei nach Ablauf der Zeitspanne Δt in die zweite Betriebsart NF mit flammenloser Oxidation übergegangen wird. Auf diese Weise lässt sich der Ofenraum 16 bei moderaten Betriebstemperaturen Tₛ von unter Tₖ mit hoher Luftvorwärmung und somit bester Energieausnutzung bei zugleich niedrigen Stickoxidemissionen betreiben.

Es ist möglich, die Zeitspanne Δt als festen Wert vorzugeben, wie es in Figur 3 veranschaulicht ist. Wird der Brenner bei kaltem Ofen (z.B. unter T=600°C) gezündet, arbeitet er zunächst mit Flamme, d.h. in der ersten Betriebsart F. Erreicht die Ofentemperatur die Temperatur Tu, wird der Brenner in die zweite Betriebsart NF umgeschaltet und arbeitet ohne Flamme weiter. Überschreitet die Ofen-Temperatur T die Soll-Temperatur Tₛ, wird der Brenner zum Zeitpunkt tₐᵤₛ ausgeschaltet. Sobald die Ofentemperatur T die Solltemperatur Tₛ spürbar unterschreitet, wird der Brenner zu dem Zeitpunkt tₑᵢₙ wieder eingeschaltet. Der Brenner wird dabei mit einer Ofentemperatur T unterhalb der kritischen Temperatur Tₖ gezündet. Dazu wird er zunächst für eine Zeitspanne Δt in der ersten Betriebsart F mit Flamme betrieben. Nach Ablauf dieser festen oder variablen Zeitspanne Δt wird in die zweite Betriebsart NF übergegangen.

Obwohl der Brenner somit beim Wiedereinschalten bei einer Ofen-Temperatur T gezündet wird, die oberhalb der Temperatur Tᵤ liegt, bei der nach dem Kaltstart aus der ersten Betriebsart F in die zweite Betriebsart NF übergegangen worden ist, wird der Brenner nun beim Wiedereinschalten zunächst in der ersten Betriebsart F gezündet und erst wenige Sekunden danach in die zweite Betriebsart NF umgeschaltet.

Alternativ oder zusätzlich können weitere Temperaturfühler vorgesehen sein. Zum Beispiel kann ein Temperaturfühler für Temperaturen in dem Ofenraum 16 oberhalb 850°C ein Signal an die Steuereinrichtung 21 senden, so dass diese die Brenner ohne Vorschaltung einer ersten Betriebsart F sofort in der zweiten Betriebsart NF startet.

Eine weitere mögliche Abwandlung oder Weiterbildung des erfindungsgemäßen Prinzip ist möglich, indem die Zeitspanne Δt, für die die Brenner 17 bis 20 zu jedem Start gemäß Figur 4 in der ersten Betriebsart F mit Flamme betrieben werden, von der Ofenraumtemperatur abhängt. Zum Beispiel kann die Zeitspanne Δt zwischen einer ersten Temperaturgrenze T₁, oberhalb derer die Brenner 17 bis 20 verpuffungsfrei direkt in der zweiten Betriebsart NF gezündet werden können, und einer zweiten Temperaturgrenze T₂, unterhalb derer ein Betrieb der Brenner 17 bis 20 im flammenlosen Betrieb, d.h. in der zweiten Betriebsart NF nicht möglich ist, variabel bemessen sein. Oberhalb der Temperaturgrenze T₁ ist die Zeitspanne Δt gleich Null. Unterhalb der Temperaturgrenze T₂ ist die Zeitspanne Δt groß oder nicht festgelegt. Zwischen den Temperaturgrenzen T₁, T₂ kann ein funktionaler Verlauf für die Zeitspanne Δt vorgegeben sein, im Rahmen derer die Zeitspanne Δt zu höheren Temperaturen hin abnimmt. Der funktionale Verlauf kann kontinuierlich oder wie gestrichelt dargestellt auch in einer oder mehreren Stufen verlaufen. Ein linearer Verlauf ist möglich.

Zur indirekten Beheizung eines Ofenraums 16 mit Strahlrohren 11 bis 14 wird Heizenergie durch die Strahlrohrwand in den Ofenraum 16 übertragen. Im stationären Betrieb entsteht in dem Strahlrohr 11 bis 14 und an dessen Oberfläche eine Übertemperatur im Vergleich zu dem Ofen, die von der spezifischen Heizleistung des Strahlrohrs 11 bis 14 abhängt. Bei einer Ofentemperatur von z.B. 770°C (<Tₖ) und einer Heizleistung von 50 kW/m² hat das Strahlrohr eine Innen-Temperatur von 900°C (>Tₖ). Die brennstoffabhängige kritische Temperatur Tₖ, ab der flammenlose Oxidation möglich ist, kann z.B. 850°C betragen. Damit kann das Strahlrohr 11 bis 14 mit dieser Leistung im Dauerbetrieb mit flammenloser Oxidation arbeiten, obwohl in dem Ofen nur 770°C (<Tₖ) vorliegen. Hat sich das Strahlrohr 11 bis 14 jedoch in einer Feuerpause auf eine Temperatur unter Tₖ abgekühlt, wird eine Verpuffung bei Zündung des zugeordneten Brenners vermieden, indem dieser zunächst einige Sekunden mit Flamme (Betriebsart F) betrieben wird, bevor auf Betriebsart NF übergegangen wird.

**Bezugszeichen:**

| | |
|---|---|
| 10 | Ofenbeheizungseinrichtung |
| 11 - 14 | Strahlungsheizungsrohre/Strahlrohre |
| 15 | Ofenwand |
| 16 | Ofenraum |
| 17 - 20 | Brenner |
| 21 | Steuereinrichtung |
| 22 - 25 | Wirkpfeile |
| 26 | Temperaturerfassungseinrichtung |
| 27, 28 | Temperatursensoren |
| F | erste Betriebsart, Brenner mit Flamme |
| NF | zweite Betriebsart, flammenlose Oxidation |
| T | Temperatur |
| t | Zeit |

## Patentansprüche

1. Ofenbeheizungseinrichtung, insbesondere für Industrieöfen zur Wärmebehandlung von Gütern in einem Ofenraum (16),
mit mindestens einem zur Beheizung des Ofenraums (16) dienenden Strahlrohrs (11), das mittels eines Brenners (17) beheizbar ist, der in einer ersten Betriebsart (F) mit Flamme und in einer zweiten Betriebsart (NF) mit flammenloser Oxidation betreibbar ist,
mit mindestens einer Steuereinrichtung (21), mittels derer der Brenner (17) des Stahlrohrs (11) ein- und ausschaltbar und zwischen den Betriebsarten (F, NF) umschaltbar ist,
wobei die Temperatur (T) des Ofenraums (16) mittels der Steuereinrichtung (21) auf eine Solltemperatur (Tₛ) festgelegt ist, die unterhalb einer kritischen Temperatur (Tₖ), die in einem Brennraum zur flammenlosen Oxidation des verwendeten Brennstoffs mindestens vorliegen muss, jedoch oberhalb einer unteren Temperatur (Tᵤ) liegt, bei der der Brenner (17) des Strahlrohrs (11) flammenlos betreibbar ist,
wobei die Steuereinrichtung (21) darauf eingerichtet ist, den Brenner (17) bei einer unter der kritischen Temperatur (Tₖ) liegenden Temperatur (T) des Ofenraums (16) in der zweiten Betriebsart (NF) zu betreiben **dadurch gekennzeichnet, dass** die Steuereinrichtung (21) darauf eingerichtet ist, den Brenner (17) bei Start bei einer Temperatur (T) des Ofenraums (16) unterhalb der kritischen Temperatur (Tₖ), jedoch über der unteren Temperatur (Tᵤ) zunächst in der ersten Betriebsart (F) zu zünden und für eine Zeitspanne (Δt) in dieser zu betreiben und danach in der zweiten Betriebsart (NF) zu betreiben.

2. Ofenbeheizungseinrichtung nach Anspruch 1, **dadurch gekennzeichnet, dass** eine Einrichtung (26) zur wenigstens lokalen Erfassung der Ofentemperatur vorgesehen ist, die mit der Steuereinrichtung (21) verbunden ist.

3. Ofenbeheizungseinrichtung nach Anspruch 2, **dadurch gekennzeichnet, dass** die Einrichtung (26) zur wenigstens lokalen Erfassung der Ofentemperatur wenigstens einen schaltenden Temperaturfühler (27) aufweist.

4. Ofenbeheizungseinrichtung nach Anspruch 2 oder 3, **dadurch gekennzeichnet, dass** die Einrichtung (26) zur wenigstens lokalen Erfassung der Ofentemperatur in einem Abstand zu dem Strahlrohr (11) außerhalb desselben angeordnet ist.

5. Ofenbeheizungseinrichtung nach einem der Ansprüche 1 bis 4, **dadurch gekennzeichnet, dass** die Steuereinrichtung (21) dazu eingerichtet ist, den wenigstens einen Brenner (17) zur Temperaturregelung des Ofenraums (16) ein- und auszuschalten.

6. Ofenbeheizungseinrichtung nach Anspruch 1, **dadurch gekennzeichnet, dass** die Zeitspanne (Δt) festgelegt ist und vorzugsweise einige Sekunden beträgt.

7. Ofenbeheizungseinrichtung nach Anspruch 1, **dadurch gekennzeichnet, dass** die Zeitspanne (Δt) in Abhängigkeit von der Temperatur (T) des Ofenraums (16) festgelegt ist.

8. Verfahren zum Zünden und Betreiben von Brennern (17) zur Beheizung von getaktet betriebenen Strahlrohren (11) bei heißem Ofen nach einer Feuerpause im Warmstartmodus, bei dem
- die Betriebstemperatur (T) des Ofens unterhalb einer kritischen Temperatur (Tₖ) liegt, die in einem Brennraum zur flammenlosen Oxidation des verwendeten Brennstoffs mindestens vorliegen muss, jedoch oberhalb einer unteren Temperatur (Tᵤ), bei der der Brenner (17) des Strahlrohrs (11) flammenlos betreibbar ist, wobei
- der Brenner (17) in einer ersten Betriebsart (F) gezündet wird, in der er mit Flamme arbeitet und für eine Zeitspanne (Δt) in dieser zu betreiben, und wobei
- der Brenner (17) danach ungeachtet der weiterhin unter der Temperaturgrenze (Tₖ) liegenden Ofentemperatur (T) in eine zweite Betriebsart (NF) mit flammenloser Oxidation umgeschaltet wird.

9. Verfahren nach Anspruch 8, **dadurch gekennzeichnet, dass** die Brenner (17) im Kaltstartmodus, bei einer Temperatur des Ofenraums (16) unter der unteren Temperatur (Tᵤ) in der ersten Betriebsart (F) mit Flamme gezündet und weiterbetrieben werden und dass die Brenner (17) in die zweite Betriebsart (NF) ohne Flamme umgeschaltet werden, sobald die Temperatur (T) des Ofenraums (16) die untere Temperatur (Tᵤ) überschreitet.

10. Verfahren nach Anspruch 8 oder 9, **dadurch gekennzeichnet, dass** die Brenner (17) zur Regelung der Temperatur (T) des Ofenraums auf die die gewünschte Temperatur (Tₛ) im Pulsfeuerbetrieb betrieben werden.

11. Verfahren nach Anspruch 10, **dadurch gekennzeichnet, dass** die gewünschte Temperatur (Tₛ) des Ofenraums (16) über der unteren Temperatur (Tᵤ), jedoch unter der kritischen Temperatur (Tₖ) liegt.

## Claims

1. Furnace heating device, in particular for industrial furnaces for heat treatment of goods in a furnace chamber (16),
with at least one radiant tube (11) serving for heating the furnace chamber (16) and heatable by means of a burner (17) which can be operated in a first operating mode (F) with flame and in a second operating mode (NF) with flameless oxidation,
with at least one control device (21), by means of which the burner (17) of the radiant tube (11) can be switched on and off and switched between operating modes (F, NF), wherein the temperature (T) of the furnace chamber (16) is set by means of the control device (21) to a nominal temperature (Ts) which lies below a minimum critical temperature (Tk) required in a combustion chamber for flameless oxidation of the fuel used, but which lies above a lower temperature (Tu) at which the burner (17) of the radiant tube (11) can be operated flamelessly,
wherein the control device (21) is configured to operate the burner (17) in the second operating mode (NF) at a temperature (T) of the furnace chamber (16) which lies below the critical temperature (Tk),
**characterised in that** the control device (21) is configured, on start-up at a temperature (T) of the furnace chamber (16) which lies below the critical temperature (Tk) but above the lower temperature (Tu), firstly to ignite the burner (17) in the first operating mode (F) and operate it therein for a time period (Δt), and thereafter to operate it in the second operating mode (NF).

2. Furnace heating device according to claim 1, **characterised in that** a device (26) for at least local detection of the furnace temperature is provided and is connected to the control device (21).

3. Furnace heating device according to claim 2, **characterised in that** the device (26) for at least local detection of the furnace temperature has at least one switching temperature sensor (27).

4. Furnace heating device according to claim 2 or 3, **characterised in that** the device (26) for at least local detection of the furnace temperature is arranged outside the radiant tube (11) and at a distance therefrom.

5. Furnace heating device according to any of claims 1 to 4, **characterised in that** the control device (21) is configured to switch the at least one burner (17) on and off in order to regulate the temperature of the furnace chamber (16).

6. Furnace heating device according to claim 1, **characterised in that** the time period (Δt) is established and preferably amounts to a few seconds.

7. Furnace heating device according to claim 1, **characterised in that** the time period (Δt) is established depending on the temperature (T) of the furnace chamber (16).

8. Method for igniting and operating burners (17) for heating radiant tubes (11) operated in cyclic fashion in a hot furnace after a firing pause in warm start mode, wherein
- the operating temperature (T) of the furnace lies below a minimum critical temperature (Tk) required in a combustion chamber for flameless oxidation of the fuel used, but lies above a lower temperature (Tu) at which the burner (17) of the radiant tube (11) can be operated flamelessly, wherein
- the burner (17) is ignited in a first operating mode (F) in which it works with a flame and is operated therein for a time period (Δt), and wherein
- thereafter, irrespective of the furnace temperature (T) still lying below the temperature limit (Tk), the burner (17) is switched to a second operating mode (NF) with flameless oxidation.

9. Method according to claim 8, **characterised in that** in cold start mode, with a temperature of the furnace chamber (16) below the lower temperature (Tu), the burner (17) is ignited in the first operating mode (F) with flame and operated further therein, and that the burner (17) is switched to the second operating mode (NF) without flame as soon as the temperature (T) of the furnace chamber (16) exceeds the lower temperature (Tu).

10. Method according to claim 8 or 9, **characterised in that** the burner (17) is operated in pulsed firing mode in order to regulate the temperature (T) of the furnace chamber to the desired temperature (Ts).

11. Method according to claim 10, **characterised in that** the desired temperature (Ts) of the furnace chamber (16) lies above the lower temperature (Tu) but below the critical temperature (Tk).

## Revendications

1. Dispositif de chauffage de fours, en particulier de fours industriels destinés au traitement thermique de produits dans une enceinte de four (16)
comprenant au moins un tube radiant (11) destiné au chauffage de l'enceinte de four (16) et pouvant être chauffé à l'aide d'un brûleur (17) qui peut travailler dans un premier mode de fonctionnement (F) à flammes et dans un deuxième mode de fonctionnement (NF) à oxydation sans flamme,
comprenant au moins un dispositif de commande (21) qui permet de mettre en marche et d'arrêter le brûleur (17) du tube radiant (11) et de le commuter entre les modes de fonctionnement (F, NF),
la température (T) de l'enceinte de four (16) étant fixée à l'aide du dispositif de commande (21) à une température de consigne (Tₛ) qui est inférieure à une température critique (Tₖ) devant régner au minimum dans une chambre de combustion à oxydation sans flammes du combustible utilisé, mais qui est supérieure à une température inférieure (Tᵤ) à laquelle le brûleur (17) du tube radiant (11) peut fonctionner sans flammes,
le dispositif de commande (21) étant conçu pour faire fonctionner le brûleur (17) dans le deuxième mode de fonctionnement (NF) lorsque la température (T) de l'enceinte de four (16) est inférieure à la température critique (Tₖ), **caractérisé en ce que** le dispositif de commande (21) est conçu pour activer le brûleur (17) d'abord dans le premier mode de fonctionnement (F) lorsque, au démarrage, la température (T) de l'enceinte de four (16) est inférieure à la température critique (Tₖ) mais supérieure à la température inférieure (Tᵤ), et pour le faire fonctionner dans ce mode pendant un laps de temps (Δt), puis pour le faire passer au deuxième mode de fonctionnement (NF).

2. Dispositif de chauffage de fours selon la revendication 1, **caractérisé en ce qu'**il est prévu un dispositif (26) qui est destiné à la mesure, au moins locale, de la température du four et qui est relié au dispositif de commande (21).

3. Dispositif de chauffage de fours selon la revendication 2, **caractérisé en ce que** le dispositif (26) de mesure, au moins locale, de la température du four présente au moins un capteur de température (27) à déclenchement.

4. Dispositif de chauffage de fours selon la revendication 2 ou 3, **caractérisé en ce que** le dispositif (26) de mesure, au moins locale, de la température du four est placé à distance du tube radiant (11), à l'extérieur de celui-ci.

5. Dispositif de chauffage de fours selon l'une des revendications 1 à 4, **caractérisé en ce que** le dispositif de commande (21) est conçu pour mettre en marche et arrêter le brûleur (17), au nombre d'au moins un, en vue de la régulation de la température de l'enceinte de four (16).

6. Dispositif de chauffage de fours selon la revendication 1, **caractérisé en ce que** le laps de temps (Δt) est défini et est de préférence de quelques secondes .

7. Dispositif de chauffage de fours selon la revendication 1, **caractérisé en ce que** le laps de temps (Δt) est défini en fonction de la température (T) de l'enceinte de four (16).

8. Procédé d'allumage et de fonctionnement de brûleurs (17) destinés au chauffage de tubes radiants (11) à fonctionnement intermittent, lorsque le four est chaud, en mode de démarrage à chaud après une interruption de chauffe, selon lequel
- la température de fonctionnement (T) du four est inférieure à une température critique (Tₖ) qui doit au minimum régner dans une chambre de combustion à oxydation sans flammes du combustible utilisé, mais qui est supérieure à une température inférieure (Tᵤ) à laquelle le brûleur (17) du tube radiant (11) peut fonctionner sans flammes, sachant que
- le brûleur (17) est démarré dans un premier mode de fonctionnement (F) dans lequel il travaille avec des flammes et fonctionne pendant un laps de temps (Δt), et sachant que
- indépendamment du fait que la température du four (T) continue d'être inférieure au seuil de température (Tₖ), le brûleur (17) est commuté à un deuxième mode de fonctionnement (NF) à oxydation sans flammes.

9. Procédé selon la revendication 8, **caractérisé en ce que**, en mode de démarrage à froid, à une température de l'enceinte de four (16) qui est inférieure à la température inférieure (Tᵤ), les brûleurs (17) sont démarrés dans le premier mode de fonctionnement (F) à flammes et continuent à fonctionner dans ce mode, et **en ce que** les brûleurs (17) sont commutés au deuxième mode de fonctionnement (NF) sans flammes, dès que la température (T) de l'enceinte de four (16) dépasse la température inférieure (Tᵤ).

10. Procédé selon la revendication 8 ou 9, **caractérisé en ce que** pour régler la température (T) de l'enceinte de four à la température (Tₛ) souhaitée, les brûleurs (17) fonctionnent en mode de chauffe pulsé.

11. Procédé selon la revendication 10, **caractérisé en ce que** la température (Tₛ) souhaitée de l'enceinte de four (16) est supérieure à la température inférieure (Tᵤ) mais inférieure à la température critique (Tₖ).
